# EUROPEAN PATENT SPECIFICATION

(11) **EP 0 562 122 B1**
(45) Date of publication and mention of the grant of the patent: **28.05.1997**
(21) Application number: 92921329.6
(22) Date of filing: 15.10.1992
(51) Int. Cl.: B60K 7/00, B60K 17/30, B60K 17/10, B60G 3/00

(54) **HYDRAULIC DRIVING DEVICE FOR STEERING WHEEL OF DUMP TRUCK**
HYDRAULISCHE ANTRIEBSVORRICHTUNG FÜR EIN LENKBARES RAD EINES KIPPERS
DISPOSITIF D'ENTRAINEMENT HYDRAULIQUE POUR LA ROUE DIRECTRICE D'UN CAMION A BENNE BASCULANTE

(30) Priority: 17.10.1991 JP 296602/91; 31.08.1992 JP 231904/92
(43) Date of publication of application: 29.09.1993
(73) Proprietor: KABUSHIKI KAISHA KOMATSU SEISAKUSHO, Minato-ku Tokyo 107 (JP)
(72) Inventor: NAGAI, Takao, Kawasaki Factory of Kabushiki Kaisha, Kawasaki-shi, Kanagawa 210 (JP); SUGANO, Yukio Kawasaki Factory of Kabushiki Kaisha, Kawasaki-shi, Kanagawa 210 (JP); HASEGAWA, Nobuki, Kawasaki Factory of K.K., Kawasaki-shi, Kanagawa 210 (JP); MORI, Masaki, Kawasaki Factory of Kabushiki Kaisha, Kawasaki-shi, Kanagawa 210 (JP); KINOSITA, Yoichi, Kawasaki Factory of K.K., Kawasaki-shi, Kanagawa 210 (JP)
(74) Representative: Grünecker, Kinkeldey, Stockmair & Schwanhäusser Anwaltssozietät
(86) International application number: PCT/JP92/01345
(87) International publication number: WO 93/08039

(56) References cited:
- EP-A- 0 456 175
- DE-A- 3 045 250
- FR-A- 2 293 638
- FR-A- 2 469 296
- GB-A- 1 239 743
- JP-A-49 020 824
- JP-A-56 053 924
- JP-Y-50 028 508
- JP-Y-60 018 981
- US-A- 3 780 820
- US-A- 4 546 844

## Description

The present invention is related to a hydraulic drive system for driving a steerable wheel of a dump truck by means of a hydraulic motor.

As a system for driving a steerable wheel of a traveling vehicle, a system disclosed in Japanese Examined Patent Publication (Kokoku) No. 48-42136, for example, has been known.

Namely, a hollow drum shaped housing is pivotally supported on a yoke. A vehicular wheel is rotatably supported on the outer periphery of the housing. An output side of a hydraulic motor which is provided within the housing is connected to a vehicular wheel side via a reduction mechanism so that the vehicular wheel can be rotatingly driven by the hydraulic motor, and in conjunction therewith, the vehicular wheel can be rocked about the yoke together with the hydraulic motor.

In such drive system for the steerable wheel, since the hydraulic motor is disposed within the hollow drum shaped housing supported on the yoke, the yoke may obstruct for removal and mounting of the hydraulic motor. Once assembled, the hydraulic motor cannot be mounted and removed. Also, the hydraulic motor necessarily becomes small.

GB-A-1 239 743 discloses a fluid operable motor that is used for driving an individual propulsion wheel. A housing of the motor has a pair of trunnions which are supported in bearings at the outer end of a pair of pivotal links forming part of the front suspension of the vehicle. Moreover, an integral cylindrical extension of the housing is used for supporting an output shaft of the motor. This shaft is connected by means of a coupling to an input shaft of a reduction gear. The reduction gear is a planetary gear type reduction mechanism.

A detachable cap is a part of the housing and is connected to an arm for connection to a drag link of the vehicle steering mechanism. Furthermore, the hydraulic motors may derive their motor fluid from a common pump.

DE-A-3 045 250 discloses a steering circuit and a transmission hydraulic circuit connected by a shift valve. During normal operation a pump supplies hydraulic fluid via a directional-control valve to a steering cylinder. In case the pump fails an emergency supply for steering is provided by a shift valve in a first position which is connected to the hydraulic transmission circuit with a line and to back-pressure valves.

The hydraulic transmission circuit comprises a second pump driven by an engine of the vehicle and a hydraulic motor which are connected by two lines. A setting pump controls the vehicle speed and supplies hydraulic fluid to the hydraulic motor via two alternative lines for driving or braking. In case of emergency the higher pressure of one line is supplied to another line via the back-pressure valves and via a further line to the directional-control valve.

FR-A-2 293 638 discloses a hydraulic motor that is detachably fixed to a support element. A shaft of the motor is protruding and rotatably connected to a drive axle by a coupling connection. This connection can be braked by a brake comprising a braking member pressed against an inner surface of a drum. Further, a suspension system is disclosed which is fixed whereby a wheel supported by such suspension system is not a steerable wheel. The hydraulic motor is directly supported on a frame member which is a part of the vehicular framework.

US-A-3 780 820 discloses a rotary clutch that transmits torque from a clutch shaft to a planetary shaft. Torque is transmitted by the latter shaft through a planetary gear train to a drive wheel in a direction determined by the direction of flow of fluid through the wheel motor. The rotary clutch means includes a fluid-activated and cooled disc-type friction clutch pack connected to the clutch shaft extending through the wheel motor cartridge and terminating at its rear end at a clutch piston.

FR-A-2 469 296 discloses a clutch mechanism between an output site of a reduction mechanism and a steerable wheel. The clutch mechanism comprises hydraulically operable cylinders with pistons for displacing an engagement element in engagement with a fork-like element. If these two elements are in engagement the rotation of a shaft is transmitted to a wheel hub via two planetary gear type reduction mechanisms.

In view of the prior art it is an object of the present invention to provide a mounting structure of a hydraulic drive system for a steerable wheel which easily facilitates assembling and disassembling of the hydraulic drive system. This object is solved according to the features of independent claim 1.

The hydraulic motor is externally exposed for permitting external access.

According to the invention, since the hydraulic motor is mounted on the receptacle seat at the opposite side of the steerable wheel, the hydraulic motor can be easily detached and attached even after assembling. Also, the greater hydraulic motor can be employed.

Also, since the auxiliary hydraulic pump is driven at a speed synchronous with the drive wheel so that the discharge amount is proportional to the speed of the drive wheel, the steerable wheel can be driven at a speed synchronous with the drive wheel. Also, since steering operation can be performed by supplying the discharged pressurized fluid of the auxiliary hydraulic pump to the steering circuit when the discharge amount of the main hydraulic pump is small, the auxiliary hydraulic pump may function as an emergency steering pump.

According to features of subclaims, by disengagement of the clutch mechanism, the steerable wheel can be placed in a state of free rotation. When a fluid flow amount in the drive circuit is large, the valve is switched so as not to supply the pressurized fluid to the clutch mechanism, the steerable wheel automatically situated into the state of the free rotation at high speed traveling.

Since the rotation of the steerable wheel is not transmitted to the reduction mechanism by disconnecting the clutch mechanism, the duration of the reduction mechanism can be improved.

The above-mentioned and other objects, aspects and advantages will become clear to those skilled in the art by the preferred and practical embodiment consistent with the principle of the invention, which will be discussed and illustrated in connection with the accompanying drawings.
**Fig. 1** is a side elevation of a dump truck to which a hydraulic drive system for a steerable wheel according to the present invention is applicable;
**Fig. 2** is a fragmentary perspective view of a frame work of the dump truck;
**Fig. 3** is a plan view of a steerable wheel mounting portion according to the present invention;
**Fig. 4** is a front elevation of the steerable wheel mounting portion;
**Fig. 5** is a section showing the first embodiment of a hydraulic motor mounting portion ;
**Fig. 6** is a schematic diagram of a drive system;
**Fig. 7** is a hydraulic circuit diagram;
**Fig. 8** is a section showing the second embodiment of the hydraulic motor mounting portion;
**Fig. 9** is a hydraulic circuit diagram;
**Fig. 10** is a section showing the third embodiment of the hydraulic motor mounting portion; and
**Fig. 11** is a section showing the fourth embodiment of the hydraulic motor mounting portion.

The present invention will be discussed hereinafter in detail with reference to the drawings.

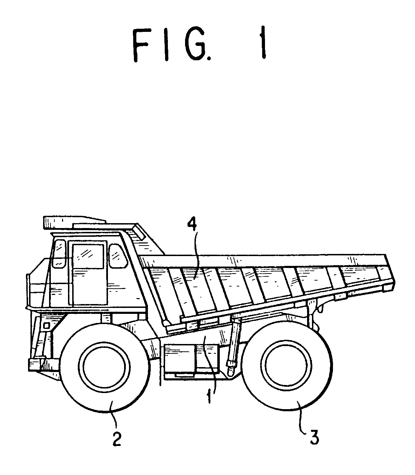

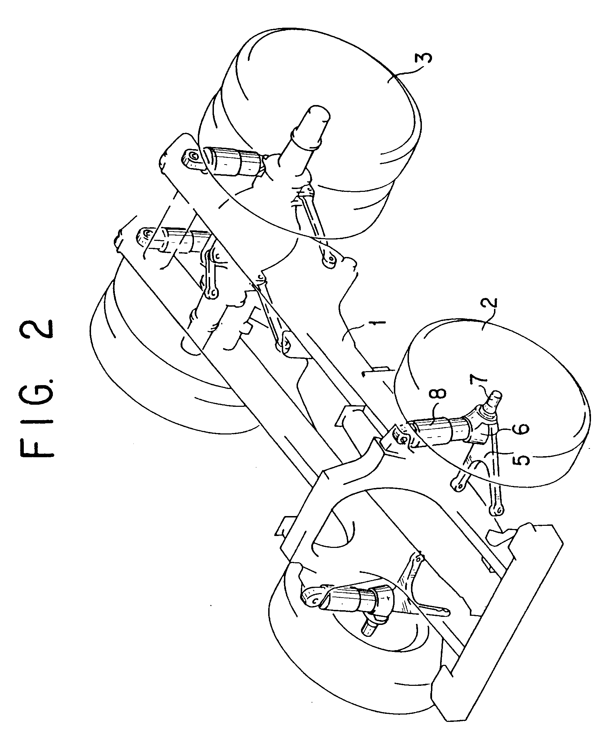

As shown in **Fig. 1**, a dump truck for a construction machine is constructed by providing steerable wheels **2** at the front portion of a vehicle body **1**, drive wheels **3** at the rear portion of the vehicle body, and a vessel **4** in tiltable fashion. As shown in **Fig. 2**, yokes **5** of bifurcated configurations are pivotally supported on front left and front right side surfaces of the vehicle body **1**. On a support shaft portion **7** of receptacle seats **6** pivotally provided on these yokes **5**, the steerable wheels **2** are rotatably mounted. Suspension cylinders **8** are connected between the receptacle seat **6** and the vehicle body **1**.

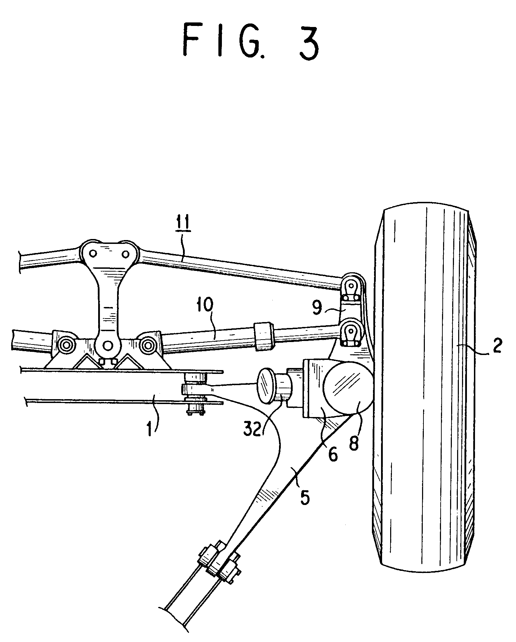

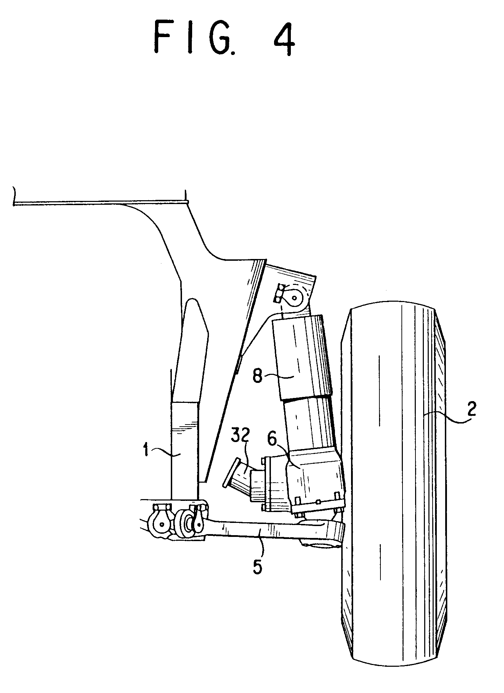

As shown in **Figs. 3** and **4**, knuckle arm **9** is provided on each receptacle seat **6**. Between the knuckle arm **9** and the vehicle body **1**, a steering cylinder **10** is connected. The left and right knuckle arms **9**, **9** are connected by a link mechanisms that the receptacle seat **6** is pivoted to change the orientation of the steerable wheels **2** by the knuckle arm **9** when the steering cylinder **10** is expanded or contracted.

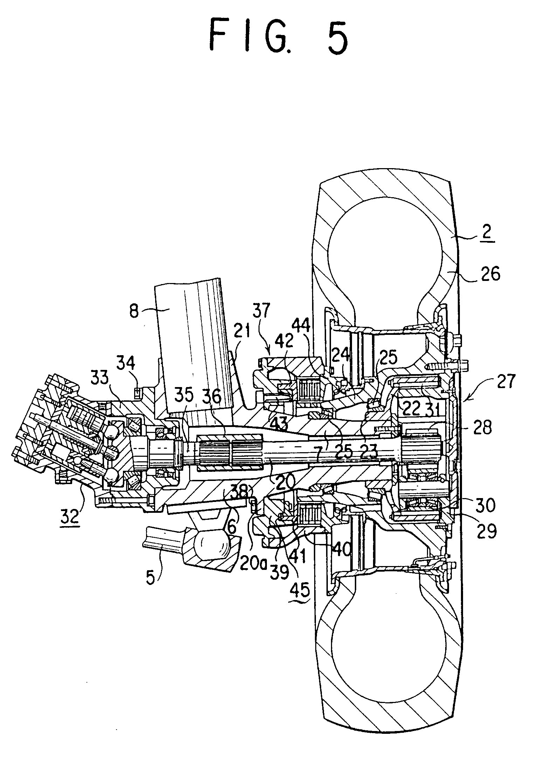

**Fig 5** shows the first embodiment of a hydraulic motor mounting portion.

The receptacle seat **6** comprises a mounting base portion **21** and the laterally directed cylindrical support shaft portion **7**. Within the support shaft portion **7**, a drive axle **20** is rotatably inserted. A boss portion **23** of a flange **22** is engaged with the outer periphery of the support shaft portion **7** and fixed thereto. A wheel hub **24** is rotatably supported via a bearing **25** between the boss portion **23** and the support shaft portion **7**. A vehicular wheel **26** is mounted on the wheel hub **24** to form the steerable wheel **2**. One end of the drive axle **20** and the wheel hub **24** are connected via a planetary gear type reduction mechanism **27**.

The reduction mechanism **27** includes a sun gear **28**, a planetary gear **30** provided on a carrier **29** and a ring gear **31**. The sun gear **28** is mounted on the drive axle **20**. The carrier **29** is connected to the wheel hub **24**. The ring gear **31** is connected to the flange **22**. Therefore, when the drive axle **20** is driven to rotate, the wheel hub **24** rotates at a reduced speed to drive the vehicular wheel **26** to rotate.

On the end of the mounting base portion **21** of receptacle seat **6** at the side opposite to the side of the vehicular wheel **26**, a motor body **33** of a hydraulic motor **32** is connected. A rotary shaft **35** of the hydraulic motor **32** is coupled with the drive axle **20** in spline coupling by means of a coupling **36**. A brake mechanism **37** is provided between the support shaft portion **7** and the wheel hub **24**.

The brake mechanism **37** includes one end plate **39** connected to an outward flange **20a** of the support shaft portion **7** by means of bolts **38**. Brake discs **41** are mounted to alternately on the cylindrical body **40** fixed to the one end plate **39** and the wheel hub **24** by spline coupling. A braking force can be thus applied to the wheel hub **24** by supplying a pressurized fluid to a fluid chamber **45** to shift a piston **42** against a spring **43** for pressure engagement of the brake discs **41** and is released from the wheel hub **24** by draining the pressurized fluid from the fluid chamber **45** and to shift the piston **42** toward the opposite direction by the spring **43** for shifting the brake discs **41** away from each other.

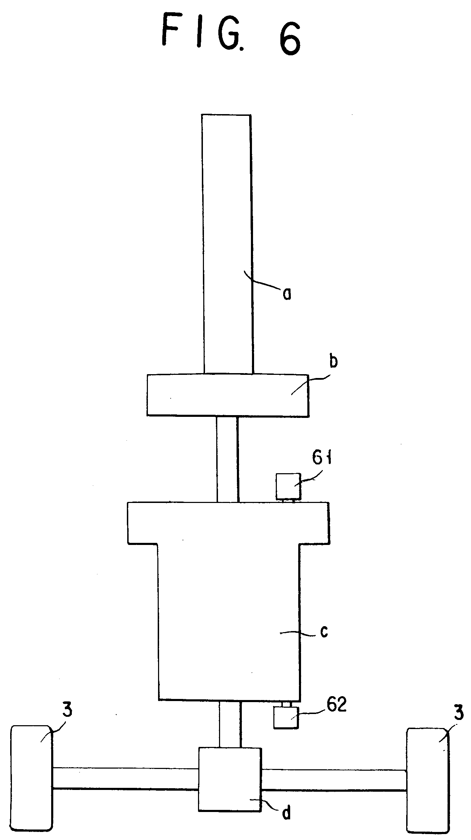

As shown in **Fig. 6**, the drive wheel **3** is driven by an engine **a** via a torque converter **b**, a power transmission **c**, a differential mechanism **d** and so forth. With the engine **a**, a main hydraulic pump **61** is driven. An auxiliary hydraulic pump **62** is driven at the output side of the power transmission **c**.

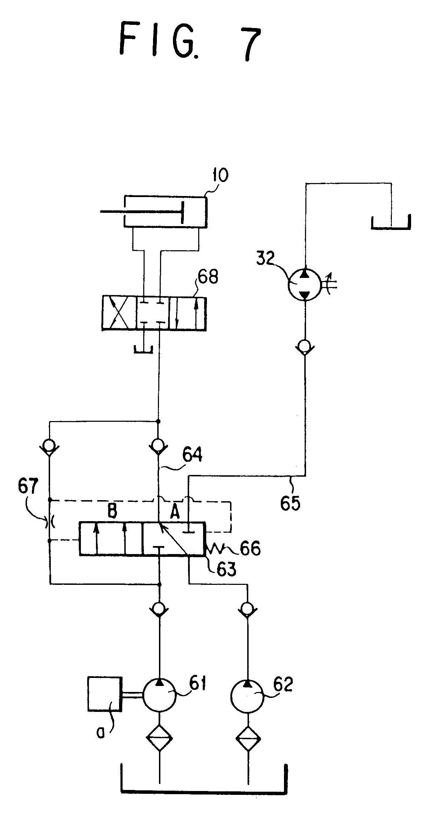

As shown in **Fig. 7**, the pressurized fluid discharged from the main hydraulic pump **61** and the pressurized fluid discharged from the auxiliary hydraulic pump **62** are supplied to a steering circuit **64** and a drive circuit **65** under a control by means of a valve **63**. The valve **63** is held at the first position **A** by means of a spring **66**, and switched into the second position **B** when a pressure difference is provided at the both sides of an orifice **67**.

The steering circuit **64** is connected to the inlet side of a steering valve **68**. The drive circuit **65** is connected to the hydraulic motor **32**.

Next, operation will be discussed.

While the engine **a** and the main hydraulic pump **61** operate in the normal state, the valve **63** is placed at the second position **B** so that the pressurized fluid discharged from the auxiliary hydraulic pump **62** is fed to the hydraulic motor **32** to drive an output shaft **35** to rotatingly drive the drive axle **7** through the coupling **36** and thus to drive the wheel **2** for rotation by the wheel hub **24** driven via the reduction mechanism **27**. In addition, since the auxiliary hydraulic pump **62** is driven by the output side of the power transmission **c** for revolution at the same speed with the drive wheel **3** so that the discharge amount is proportional to the speed of the drive wheel **3**, the steerable wheel **2** can be driven in synchronism with the drive wheel **3** by the hydraulic motor **32**. At this condition, by applying braking force on the wheel hub **24** by the brake mechanism **37**, the braking force can be applied to the steerable wheel **2**. Also, by expanding and contracting the steering cylinder **10**, the receptacle seat **6** can be pivoted via the knuckle arm **9** to pivot the steerable wheel **2** together with the hydraulic motor **32** for steering.

When the discharge amount becomes short due to failure of the engine **a** or failure of the main hydraulic pump **61**, the valve **63** is switched into the first position **A**.

By this, the pressurized fluid discharged from the auxiliary hydraulic pump can be supplied to the first circuit **64** to make steering possible by expanding and contracting the steering cylinder **10** by operation of the steering valve **68**. Therefore, the auxiliary hydraulic pump **62** functions as an emergency pump.

Next, discussion will be given for the second embodiment.

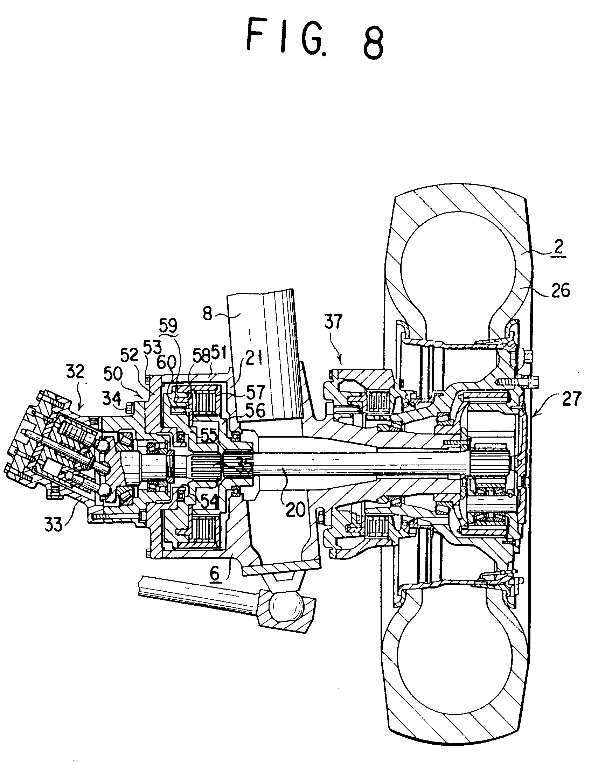

As shown in **Fig. 8**, in the shown embodiment, the drive axle **20** and the rotary shaft **35** of the hydraulic motor **32** are connected via a clutch mechanism **50**.

Namely, a large diameter cylindrical body **51** is formed integrally with the mounting base portion **21** of the receptacle seat **6** at the side opposite to the side of the vehicular wheel **26**. To the opening end face of the cylindrical body **51**, an end plate **52** is connected by means of bolts **53**. The motor body **33** of the hydraulic motor **32** is mounted on the end plate **52** by means of bolts **34** to inwardly extend the rotary shaft **35** through a central hole **54** of the end plate **52**. The rotary shaft **35** is coupled with a drive body **55** which is rotatably supported on the end plate **52** by the spline coupling, and the drive axle **20** is coupled with a driven body **56** which is rotatably supported at the side of the cylindrical body **51**. To the driven body **56** and the drive body **55**, clutch discs **57** are mounted with spline coupling to each other. A piston **58** is depressed by a fluid pressure in a fluid chamber **59** for pressure engagement of the clutch discs to engage the clutch. The piston **58** is returned by a spring **60** to release the clutch discs **57** to disengage the clutch.

With the construction set forth above, by disengaging the clutch mechanism **50** while the steerable wheels **2** are not driven, the rotation of the wheel axle **7** will not be transmitted to the drive shaft **35** of the hydraulic motor **32** so as not to cause revolution of the hydraulic motor **32**. Upon driving the steerable wheel **3**, the clutch mechanism **50** is permitted to be placed at the intermediate position between engaging and disengaging by controlling the fluid pressure to the fluid chamber **59**, namely half clutch condition, so that the difference of the left and right steerable wheels **2**, **2** can be absorbed.

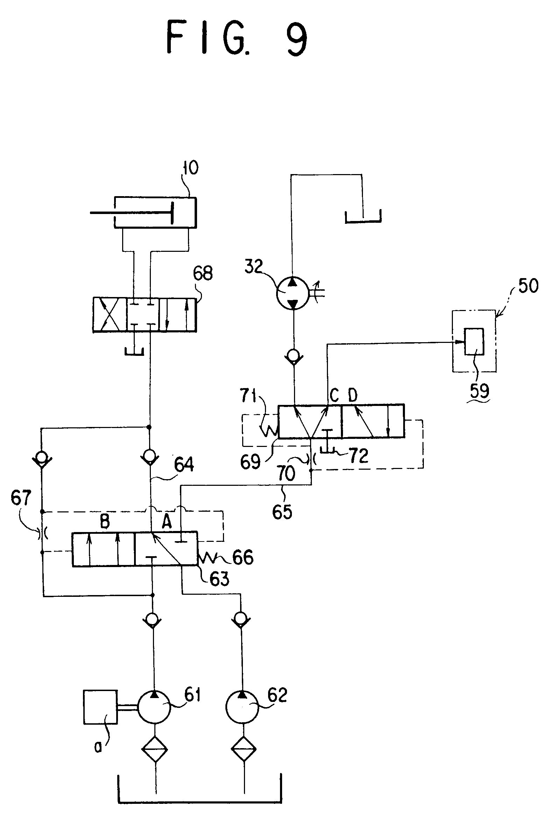

**Fig. 9** is a hydraulic circuit diagram. The pressurized fluid discharged from the main hydraulic pump **61** driven by the engine **a** and the auxiliary hydraulic pump **62** provided at the output side of the axle or the power transmission **c** for emergency steering is supplied to the steering circuit **64** and the drive circuit **65** by the valve **63**. The drive circuit **65** is selectively connected to the hydraulic motor **32** and the clutch mechanism **50**.

The valve **69** is positioned at the first position **C** when a pressure difference across an orifice **70** provided in the drive circuit **65** is small for supplying the pressurized fluid of the drive circuit **65** to the hydraulic motor **32** and the hydraulic chamber **59** of the clutch mechanism **50**, and at the second position **D** when the pressure difference across the orifice **70** is larger for supplying the pressurized fluid of the drive circuit **65** only to the hydraulic motor **32** and for draining the pressurized fluid in the fluid chamber **59** of the clutch mechanism **50** to a tank **72**.

With the construction set forth above, the auxiliary hydraulic pump **62** is provided a function as the emergency pump and, since it discharges the fluid amount proportional to the rotation speed of the drive wheel **3**, complicate speed control for the hydraulic motor **32** becomes unnecessary and accurate vehicle speed control while the steerable wheels **2** are driven. Furthermore, when the vehicle speed becomes higher than or equal to a set vehicle speed to increase the discharge amount of the main and auxiliary hydraulic pumps **61**, **62**, the valve **69** is switched into the second position **D** to disengage the clutch mechanism **50** to automatically terminate driving of the steerable wheels **2** resulting in free rotation of the steerable wheels **2**.

Next, the third embodiment will be discussed.

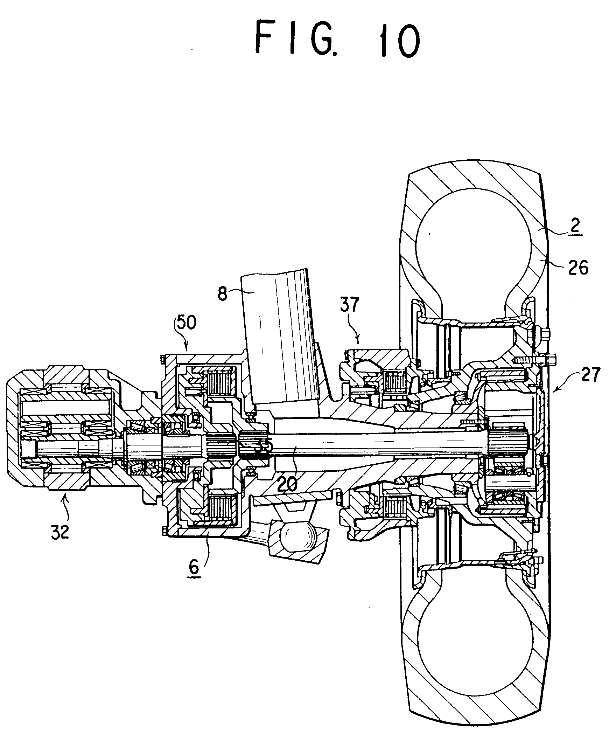

As shown in **Fig. 10**, a gear type hydraulic motor is employed as the hydraulic motor **32**. The rotary shaft **35** of the hydraulic motor is connected to the drive axle **20** via the clutch mechanism **50**.

Next, the fourth embodiment will be discussed.

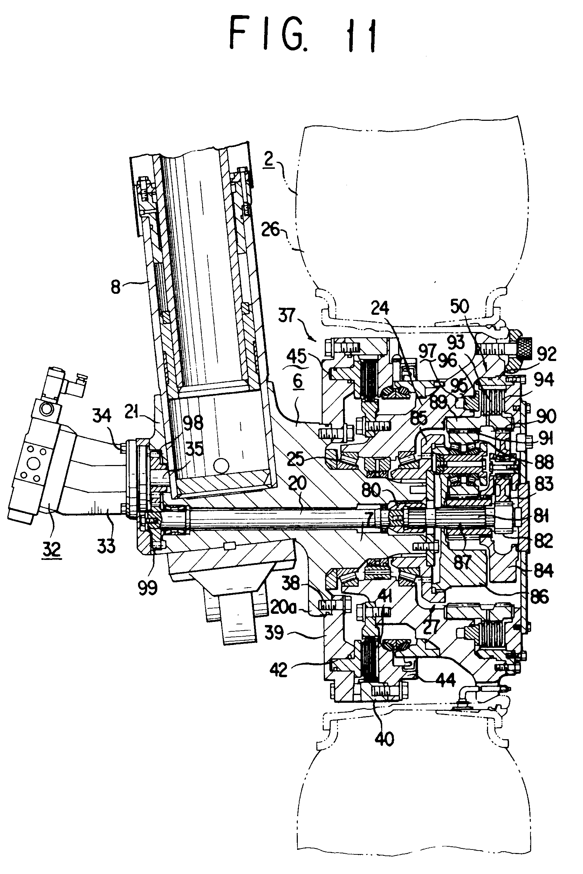

As shown in **Fig. 11**, the receptacle seat **6** comprises the mounting base portion **21** and a laterally oriented cylindrical support shaft portion **7**. Within the support shaft portion **7**, the drive axle **20** is disposed in rotatable fashion. On the outer periphery of the support shaft portion **7**, the wheel hub **24** is rotatably supported via the bearing **25**. The vehicular wheel **26** is mounted in the wheel hub **24**. Thus, the steerable wheel **2** is formed. One end of the drive axle **20** and the wheel hub **24** are connected to the planetary gear type reduction mechanism **27** via the clutch mechanism **50**.

The reduction mechanism **27** includes a first sun gear **82** integrally provided with an input shaft **81** connected to the drive axle **20** via a coupling **80**, a first planetary gear **83** meshing with the first sun gear **82**, a first carrier **84** supporting the first planetary gear **83**, a stationary ring gear **85** coupled with the end of the support shaft portion **7** of the receptacle seat **6** by spline coupling, a second sun gear **87** supported on the support shaft portion **7**, a second planetary gear **88** provided on a second carrier **86** which is splined with the stationary ring gear **85** and meshing with the second sun gear **87**, and a driving cylindrical body **89** rotatably supported on the wheel hub **24**. First and second internal gears **90**, **91** formed on the driving cylindrical body **89** are meshed with the first and second planetary gears **83**, **88** respectively. The first carrier **84** is meshed with the second sun gear **87**. Thus, two stage reduction mechanism is formed

The clutch mechanism **50** includes drive clutches plates **93** and driven clutch plates **94** alternately splined to the driven cylindrical body **92** which is fixed to the wheel hub **24** by means of bolts, and the driving cylindrical body **89**. The driving clutch plates **93** is designed to be engaged onto the driven clutch plates **94** by means of a piston **95** under pressure, The piston **95** is formed into a ring-shaped configuration and engaged within an annular cavity **96** of the wheel hub **24** to define a pressure receiving chamber **97**. By supplying the pressurized fluid to the pressure receiving chamber **97**, the piston **95** is expanded to establish engagement between the driving clutch plates **93** and the driven clutch plates **94** to transmit rotation of the drive axle **20** to the wheel hub **24**. On the other hand, by draining the pressurized fluid from the pressure receiving chamber **97**, the driving clutch plates **93** and the driven clutch plate **94** are released away from each other to disconnect the reduction mechanism **27** provided on the drive axle **20** and the wheel hub **24**. As a result, during high speed travel, the reduction mechanism **27** is never rotate by the rotation of the steerable wheel, abnormal wearing of respective components of the reduction mechanism can be successfully prevented.

At the side opposite to the side of the vehicular wheel **26** in the mounting base portion **21** of the receptacle seat **6**, the motor body **33** of the hydraulic motor **32** is connected by means of bolts **34**. The rotary shaft **35** of the hydraulic motor **32** is connected to the drive axle **20** via a first gear **98** and a second gear **99**. A brake mechanism **37** is disposed between the support shaft portion **7** and the wheel hub **24**.

The brake mechanism **37** includes one end plate **39** connected to the outward flange **20a** by means of bolts **38**. Brake discs **41** are mounted to alternately on the cylindrical body **40** fixed to the one end plate **39** and the wheel hub **24** by spline coupling. A braking force can be thus applied to the wheel hub **24** by supplying a pressurized fluid to a fluid chamber **45** to shift a piston **42** against a spring **43** for pressure engagement of the brake discs **41**.

As set forth above, the hydraulic drive system for the steerable wheel of the dump truck according to the present invention permits attaching and detaching of the hydraulic motor even after assembling. Also, since the present invention permits employment of greater hydraulic motor, it is effective as the hydraulic drive system for the steerable wheel of a large size dump truck.

## Claims

1. A hydraulic drive system for a steerable wheel of a dump truck comprising:
a yoke (5) pivotally supported on a vehicle body (1) in substantially horizontal direction,
a receptacle seat (6) mounted on said yoke (5) in pivotable fashion;
a suspension cylinder (8) connected between the receptacle seat (6) and the vehicle body (1),
a knuckle arm (9) extending from the receptacle seat (6) for changing the orientation of the steerable wheel (2),
a drive axle (20) rotatably supported in a support shaft portion (7) of said receptacle seat (6),
said steerable wheel (2) rotatably supported on the outer periphery of said support shaft portion (7), whereby one end of said drive axle (20) is connected to said steerable wheel (2) through a reduction mechanism (27), and
a hydraulic motor (32) with its motor body (33) detachably mounted externally on said receptacle seat (6) at a side opposite to said steerable wheel (2) in such a manner that a rotary shaft (35) thereof mates with the inside of said support shaft portion (7), and is connected to the other end of said drive axle (20).

2. A hydraulic drive system according to claim 1, **characterized in that** a discharge side of a main hydraulic pump (61) driven by an engine (a) is connected to a steering circuit (64), and the discharge side of an auxiliary hydraulic pump (62) driven by an output side of a power transmission (c) is connected to one of said steering circuit (64) and a drive circuit (65) through a valve (63), said valve is selectively connectable to said drive circuit (65) and to said steering circuit (64) depending on a discharge amount of said main hydraulic pump (61), whereby said drive circuit (65) is connected to said hydraulic motor (32).

3. The hydraulic drive system according to claim 1, **characterized in that** the discharge side of a main hydraulic pump (61) driven by an engine (a) is connected to a steering circuit (64), a discharge side of an auxiliary hydraulic pump (62) driven at the output side of the power transmission (c) is connected to one of said steering circuit (64) and a drive circuit (65) through a valve (63), selectively connecting the auxiliary hydraulic pump (62) to said drive circuit (65) when the discharge amount of said main hydraulic pump (61) is large and to said steering circuit (64) when it is small, and said drive circuit (65) is connected to both said hydraulic motor (32) and a clutch mechanism (50) connecting said rotary shaft (35) to the other end of said drive axle (20) or only to said hydraulic motor (32) through a valve (69), said valve (69) providing the connection to only said hydraulic motor (32) when a flow rate in the drive circuit (65) is large and a connection to both said hydraulic motor (32) and said clutch mechanism (50) when said flow rate is small.

4. The hydraulic drive system according to claim 1 or 2, **characterized in that** said rotary shaft (35) is connected to the other end of said drive axle (20) via a clutch mechanism (50).

5. The hydraulic drive system according to claims 1 or 2, **characterized in that** the output side of said reduction mechanism (27) is connected to said steerable wheel through a clutch mechanism (50).

## Patentansprüche

1. Hydraulische Antriebsvorrichtung für ein lenkbares Rad eines Kippers mit
einer an einem Fahrzeugchassis (1) im wesentlichen in horizontaler Richtung schwenkbar gelagerten Gabel (5);
einem an der Gabel (5) verschwenkbar montierten Aufnahmesitz (6);
einem zwischen Aufnahmesitz (6) und Fahrzeugchassis (1) verbundenen Aufhängungszylinder (8);
einem von dem Aufnahmesitz (6) zur Orientierungsänderung des lenkbaren Rades (2) abstehenden Gelenkarm (9);
einer drehbar in einem Tragwellenbereich (7) des Aufnahmesitzes (6) gelagerten Antriebsachse (20),
wobei das lenkbare Rad (2) am Außenumfang des Tragwellenbereichs (7) drehbar gelagert ist, während ein Ende der Antriebsachse (20) mit dem lenkbaren Rad (2) durch einen Untersetzungsmechanismus (25) verbunden ist, und
einem Hydraulikmotor (32) mit einem lösbar von außen auf dem Aufnahmesitz (6) auf einer Seite gegenüberliegend zum lenkbaren Rad (2) in einer solchen Weise montierten Motorkörper (33), daß dessen Drehwelle (35) mit dem Innern des Tragwellenbereichs (7) in Eingriff steht und mit dem anderen Ende der Antriebsachse (20) verbunden ist.

2. Hydraulische Antriebsvorrichtung nach Anspruch 1, **dadurch gekennzeichnet, daß** eine Abgabeseite einer Haupthydraulikpumpe (61), die durch einen Motor (a) angetrieben ist, mit einer Steuerschaltung (64) verbunden ist und die Abgabeseite einer Hilfshydraulikpumpe (62), die von einer Ausgangsseite eines Getriebes (c) angetrieben ist, mit der Steuerschaltung (64) oder einer Antriebsschaltung (67) durch ein Ventil (63) verbunden ist, wobei das Ventil selektiv mit der Antriebsschaltung (65) und der Steuerschaltung (64) in Abhängigkeit von einer Abgabemenge der Haupthydraulikpumpe (61) verbindbar ist, wodurch die Antriebsschaltung (65) mit dem Hydraulikmotor (33) verbunden ist.

3. Hydraulische Antriebsvorrichtung nach Anspruch 1, **dadurch gekennzeichnet, daß** die Abgabeseite einer Haupthydraulikpumpe (61), die von einem Motor (a) angetrieben ist, mit einer Steuerschaltung (64) verbunden ist und eine Abgabeseite einer Hilfshydraulikpumpe (62), die von einer Ausgabeseite des Getriebes (10) angetrieben ist, mit der Steuerschaltung (64) oder einer Antriebsschaltung (65) durch ein Ventil (63) verbunden ist, welches selektiv die Hilfshydraulikpumpe (62) mit der Antriebsschaltung (65) verbindet, wenn die Abgabemenge der Haupthydraulikpumpe (61) groß ist, und mit der Steuerschaltung (64) verbindet, wenn die Abgabemenge klein ist, wobei die Steuerschaltung (65) sowohl mit dem Hydraulikmotor (32) als auch einem Kupplungsmechanismus (50) verbunden ist, welcher die Drehwelle (35) mit dem anderen Ende der Antriebsachse (20) oder nur mit dem Hydraulikmotor (32) durch ein Ventil (69) verbunden ist, welches Ventil (69) die Verbindung nur zum Hydraulikmotor (62) bereitstellt, wenn eine Flußrate in der Antriebsschaltung (65) groß ist, und eine Verbindung sowohl zum Hydraulikmotor (32) als auch zum Kupplungsmechanismus (50) herstellt, wenn die Flußrate gering ist.

4. Hydraulische Antriebsvorrichtung nach Anspruch 1 oder 2, **dadurch gekennzeichnet, daß** die Drehwelle (35) mit dem anderen Ende der Antriebsachse (20) über einen Kupplungsmechanismus (50) verbunden ist.

5. Hydraulische Antriebsvorrichtung nach Anspruch 1 oder 2, **dadurch gekennzeichnet, daß** die Ausgabeseite des Untersetzungsmechanismus (27) mit dem lenkbaren Rad durch einen Kupplungsmechanismus (50) verbunden ist.

## Revendications

1. Un dispositif d'entraînement hydraulique pour une roue directrice d'un camion à benne basculante comprenant :
une chape (5) supportée à pivotement sur un châssis (1) de véhicule dans une direction approximativement horizontale,
une embase de réception (6) montée sur ladite chape (5) de manière pivotante,
un cylindre de suspension (8) connecté entre l'embase de réception (6) et le châssis de véhicule (1),
un bras d'articulation (9) s'étendant depuis l'embase de réception (6) pour modifier l'orientation de la roue directrice (2),
un arbre moteur (20) supporté à rotation dans une partie formant fût support (7) de ladite embase de réception (6),
ladite roue directrice (2) supportée à rotation sur la périphérie extérieure de ladite partie formant fût support (7), de telle sorte qu'une extrémité dudit arbre moteur (20) soit connectée à ladite roue directrice (2) à travers un mécanisme de réduction (27), et
un moteur hydraulique (32) avec son corps de moteur (33) monté de manière amovible à l'extérieur de ladite embase de réception (6) à un côté opposé à ladite roue directrice (2) de telle sorte qu'un arbre tournant (35) de celui-ci s'adapte à l'intérieur de ladite partie formant fût support (7), et soit relié à l'autre extrémité dudit arbre moteur (20).

2. Un dispositif d'entraînement hydraulique selon la revendication 1, caractérisé en ce qu'un côté d'écoulement d'une pompe hydraulique principale (61) entraînée par un moteur (a) est connecté à un circuit de direction (64), et le côté d'écoulement d'une pompe hydraulique auxilliaire (62) entraînée par un côté de sortie d'une transmission de puissance (c) est connecté à l'un desdits circuit de direction (64) et circuit d'entraînement (65) à travers une soupape (63), ladit soupape étant connectable sélectivement audit circuit d'entraînement (65) et audit circuit de direction (64) en fonction d'une quantité d'écoulement de ladite pompe hydraulique principale (61), de telle sorte que ledit circuit d'entraînement (65) est connecté audit moteur hydraulique (32).

3. Le dispositif d'entraînement hydraulique selon la revendication 1, caractérisé en ce que le côté d'écoulement d'une pompe hydraulique principale (61) entraînée par un moteur (a) est connecté à un circuit de direction (64), un côté d'écoulement d'une pompe hydraulique auxiliaire (62) entraînée du côté de sortie d'une transmission de puissance (c) est connecté à l'un desdits circuit de direction (64) et circuit d'entraînement (65) à travers une soupape (63), connectant sélectivement la pompe hydraulique auxiliaire (62) audit circuit d'entraînement (65) quand la quantité d'écoulement de ladite pompe hydraulique principale (61) est grande et audit circuit de direction (64) quand elle est petite, et ledit circuit d'entraînement (65) est connecté à la fois audit moteur hydraulique (32) et à un mécanisme d'embrayage (50) connectant ledit arbre tournant (35) à l'autre extrémité dudit arbre moteur (20) ou seulement audit moteur hydraulique (32) à travers une soupape (69), ladit soupape (69) assurant la connexion seulement audit moteur hydraulique (32) quand un écoulement dans le circuit d'entraînement (65) est grand et une connexion à la fois audit moteur hydraulique (32) et audit mécanisme d'embrayage (50) quand ledit débit est petit.

4. Le dispositif d'entraînement hydraulique selon la revendication 1 ou 2, caractérisé en ce que ledit arbre tournant (35) est connecté à l'autre extrémité dudit arbre d'entraînement (20) par l'intermédiaire d'un mécanisme d'embrayage (50).

5. Le dispositif d'entraînement hydraulique selon les revendications 1 ou 2, caractérisé en ce que le côté de sortie dudit mécanisme de réduction (27) est connecté à ladite roue directrice à travers un mécanisme d'embrayage (50).
